# EUROPÄISCHE PATENTSCHRIFT

(11) **EP 2 786 904 B1**
(45) Veröffentlichungstag und Bekanntmachung des Hinweises auf die Patenterteilung: **15.03.2017**
(21) Anmeldenummer: 14000344.3
(22) Anmeldetag: 30.01.2014
(51) Int. Cl.: B60R 19/48, B62D 43/04

(54) **HALTEVORRICHTUNG ZUR ANBRINGUNG AN EIN KRAFTFAHRZEUG**
MOUNTING DEVICE FOR ATTACHMENT TO A MOTOR VEHICLE
DISPOSITIF DE RETENUE DESTINÉ À L'INSTALLATION SUR UN VÉHICULE AUTOMOBILE

(30) Priorität: 04.04.2013 DE 102013005833
(43) Veröffentlichungstag der Anmeldung: 08.10.2014
(73) Patentinhaber: MAN Truck & Bus AG, 80995 München (DE)
(72) Erfinder: Nutz, Thomas, 80935 München (DE); Geilhorn, Katharina, 85416 Langenbach (DE)
(74) Vertreter: v. Bezold & Partner Patentanwälte - PartG mbB

(56) Entgegenhaltungen:
- WO-A1-2007/074643
- FR-A1- 2 380 176
- US-A- 4 360 228
- US-A- 4 896 910
- US-A1- 2010 026 019

## Beschreibung

Die Erfindung betrifft ein Kraftfahrzeug mit einer am Kraftfahrzeug angeordneten Haltevorrichtung zur Halterung z.B. einer Radarsensoreinrichtung für ein Notbrems-Assistenzsystem für das Kraftfahrzeug.

Notbrems-Assistenzsysteme und zugehörige Radarsensoreinrichtungen zur Früherkennung von Hindernissen auf oder neben der Fahrbahn sind aus dem Stand der Technik bekannt. Die Radarsensoreinrichtungen werden mittels einer Haltevorrichtung üblicherweise an den Kraftfahrzeugbug montiert. Um optimal arbeiten zu können, sollten die meisten Radarsensoreinrichtungen mittig an den Kraftfahrzeugbugs montiert werden. Oftmals ist allerdings eine mittige Montage der Radarsensoreinrichtung nicht möglich, weil dort bereits ein anderes Funktionsteil positioniert ist, z.B. eine Befestigungseinrichtung für ein Reserverad für das Kraftfahrzeug, so dass die Radarsensoreinrichtung meist nicht an optimaler Stelle am Kraftfahrzeug verbaut werden kann oder der Einsatz der Radarsensoreinrichtung gänzlich ausscheidet. Zum Stand der Technik ist noch zu erwähnen, dass die US 2010/026019 A1, die den Oberbegriff des Anspruchs 1 bildet, einen Omnibus mit einem hinter einer Klappe verstauten Ersatzrad offenbart.

Eine Aufgabe der Erfindung ist es, eine Möglichkeit zu schaffen, mittels der das zuvor beschriebene Problem gelöst werden kann.

Diese Aufgabe kann mit den Merkmalen des Hauptanspruchs gelöst werden. Vorteilhafte Weiterbildungen der Erfindung können den Unteransprüchen und der folgenden Beschreibung entnommen werden. Die Erfindung ist allerdings nicht auf Ausführungsformen mit einer mittigen Montage und/oder einer Montage am Kraftfahrzeugbug beschränkt. Vielmehr beansprucht die Erfindung allgemein Schutz für die nachfolgend beschriebenen Ausführungsformen.

Die Erfindung schafft ein Kraftfahrzeug mit einer Haltevorrichtung, die am Kraftfahrzeug (z.B. Nutzfahrzeug, insbesondere Lastkraftwagen oder Omnibus) angebracht ist, vorzugsweise an einen Kraftfahrzeugbug und somit zweckmäßig an die Frontseite des Kraftfahrzeugs. Die Haltevorrichtung umfasst einen Tragabschnitt zur Montage an das Kraftfahrzeug und einen Halteabschnitt. Der Halteabschnitt dient zum Halten eines Funktionselements, nämlich einer Sensoreinrichtung, und zum Positionieren benachbart zu einer Ausgangsöffnung für eine Befestigungseinrichtung für ein Reserverad für das Kraftfahrzeug. Der Halteabschnitt ist um eine Schwenkachse schwenkbar und zwar von einem ersten Zustand, in dem der Halteabschnitt die Ausgangsöffnung zumindest teilweise verschließt, in einen zweiten Zustand, in dem der Halteabschnitt die Ausgangsöffnung so freigibt, dass das Reserverad entnommen werden kann, und wobei der Halteabschnitt schwenkbar an dem Trageabschnitt montiert ist.

Der Halteabschnitt umfasst vorzugsweise zwei Längsträger, an denen der Halteabschnitt schwenkbar montiert ist.

Die Haltevorrichtung umfasst vorzugsweise zumindest ein Verbindungselement, über das der Halteabschnitt an dem Tragabschnitt zweckmäßig im ersten Zustand fixierbar ist. Das Verbindungselement ist vorzugsweise als Schraubverbindung mit Zentrierbolzen ausgeführt. Der Zentrierbolzen dient dazu, den Halteabschnitt und somit das Funktionselement nach einem Schwenkvorgang in den zweiten Zustand wieder exakt und vordefiniert im ersten Zustand zu fixieren und zwar vorzugsweise so, dass eine Nachjustierung des Funktionselements nicht erforderlich wird.

Es ist möglich, dass die Haltevorrichtung zumindest ein Rast- oder Schnappelement aufweist, über das der Halteabschnitt an dem Tragabschnitt im ersten Zustand und/oder im zweiten Zustand fixierbar ist. Das Rast- oder Schnappelement dient mitunter dazu, eine Fixierung des Halteabschnitts selbst dann zu gewährleisten, wenn sich das Verbindungselement im ersten Zustand unbeabsichtigt löst. Das Schnapp- oder Rastelement umfasst vorzugsweise ein Vorspannelement, z.B. eine Feder, mittels dem es automatisch in den Fixierzustand gebracht werden kann.

Zumindest zwei der folgenden Teile sind in Längsrichtung der Haltevorrichtung vorzugsweise voneinander beabstandet angeordnet: Die Schwenkachse, das zumindest eine Verbindungselement und/oder das zumindest eine Schnappelement. Es ist möglich, dass die Schwenkachse zwischen dem zumindest einen Verbindungselement und dem zumindest einen Schnappelement verläuft.

Der Halteabschnitt kann in mehrere Teilbereiche unterteilt sein. So kann der Halteabschnitt z.B. einen an den Tragabschnitt montierten ersten Teilbereich und einen zweiten Teilbereich aufweisen, wobei die Position des zweiten Teilbereichs relativ zum ersten Teilbereich einstellbar ist, vorzugsweise über eine Langlochkonstruktion. Ferner kann der Halteabschnitt einen dritten Teilbereich aufweisen, wobei die Position des dritten Teilbereichs relativ zum zweiten Teilbereich einstellbar ist, vorzugsweise über eine Langlochkonstruktion. Das Funktionselement ist zweckmäßig am dritten Teilbereich montiert.

Es ist möglich, dass der Tragabschnitt mittels einer Langlochkonstruktion zur Montage an das Kraftfahrzeug ausgeführt ist.

Die Langlochkonstruktionen dienen dazu, dass die Position des Funktionselements in einer bestimmten Raumrichtung verstellbar ist. Die drei Langlochkonstruktionen dienen somit dazu, dass die Position des Funktionselements in allen drei Raumrichtungen verstellbar ist.

Die Sensoreinrichtung ist vorzugsweise eine Radarsensoreinrichtung zur Früherkennung eines Hindernisses und/oder für ein Notbrems-Assistenzsystem des Kraftfahrzeugs ist.

Die oben beschriebenen bevorzugten Ausführungsformen der Erfindung sind beliebig miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine perspektivische Ansicht einer Haltevorrichtung gemäß einer Ausführungsform der Erfindung,
- Figur 2: zeigt eine perspektivische Ansicht der Haltevorrichtung der Figur 1 mit gelösten Verbindungselementen,
- Figur 3: zeigt eine perspektivische Ansicht der Haltevorrichtung der Figur 2 mit zusätzlich gelösten Rast- oder Schnappelementen
- Figur 4: zeigt eine perspektivische Ansicht der Haltevorrichtung der Figur 3 während eines Schwenkvorgangs in einen geöffneten Zustand nach oben,
- Figur 5: zeigt eine perspektivische Ansicht der Haltevorrichtung der Figur 4 in hochgeklapptem, mittels den Rast- oder Schnappelementen fixiertemn Zustand,
- Figur 6: zeigt eine Seitenansicht der Haltevorrichtung der Figuren 1 bis 5 montiert an einen Kraftfahrzeugbug,
- Figur 7: zeigt eine Vorderansicht der Haltevorrichtung der Figur 6,
- Figur 8: zeigt eine Seitenansicht der Haltevorrichtung der Figur 6 in hochgeklapptem Zustand und
- Figur 9: zeigt eine Vorderansicht der Haltevorrichtung der Figur 6 in hochgeklapptem Zustand.

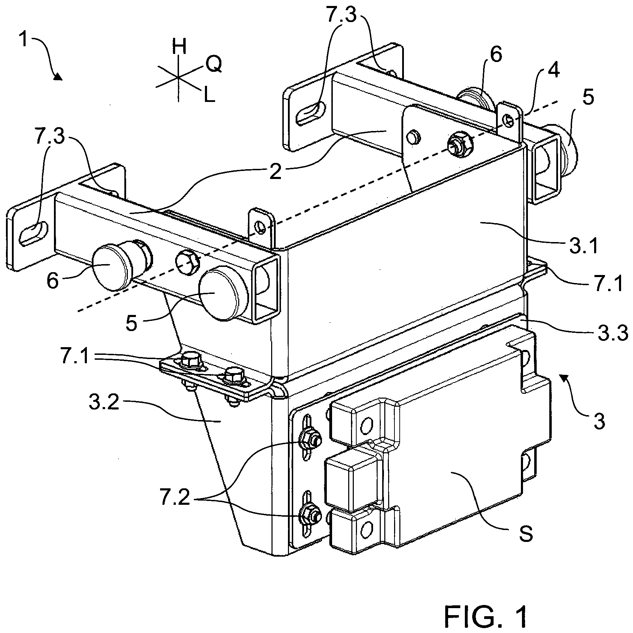

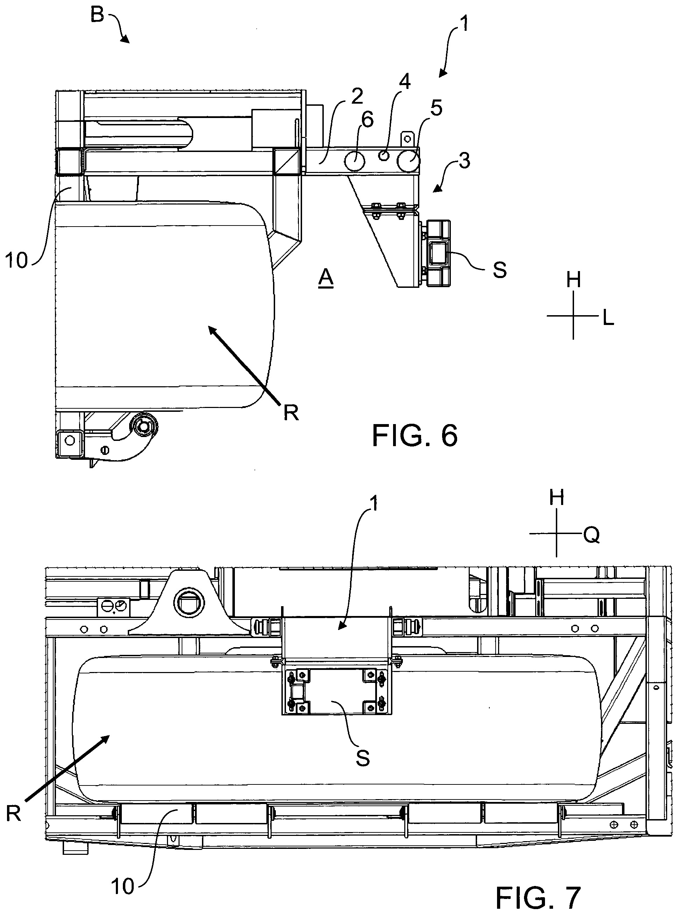

Figur 1 zeigt eine perspektivische Ansicht einer Haltevorrichtung 1 gemäß einer Ausführungsform der Erfindung, während Figur 6 eine Seitenansicht der Haltevorrichtung 1 montiert an einen Kraftfahrzeugbug B zeigt. Nachfolgend wird die Haltevorrichtung 1 zunächst unter Bezugnahme auf die Figuren 1 und 6 beschrieben. Das Kraftfahrzeug ist vorzugsweise ein Nutzfahrzeug, z.B. ein Lastkraftwagen oder ein Omnibus.

Die Haltevorrichtung 1 umfasst einen Tragabschnitt 2, der aus zwei Längsträgern (z.B. Rechteckhohlprofile) gebildet wird und zur Montage an das Kraftfahrzeug dient. Die Haltevorrichtung 1 umfasst zudem einen Halteabschnitt 3, der an dem Tragabschnitt 2 montiert ist und zum Halten eines Funktionselements S dient. Das Funktionselement S ist als Radarsensor ausgeführt und Teil eines Notbrems-Assistenzsystems des Kraftfahrzeugs.

Das Kraftfahrzeug umfasst eine Befestigungseinrichtung 10 für ein Reserverad R für das Kraftfahrzeug, wobei das Reserverad R über eine Ausgangsöffnung A aus der Befestigungseinrichtung 10 entnommen werden kann. Die Haltevorrichtung 1 ist so an dem Kraftfahrzeug montiert, dass der Halteabschnitt 3 benachbart, insbesondere vor dem Reserverad R und vor der Ausgangsöffnung A positioniert ist.

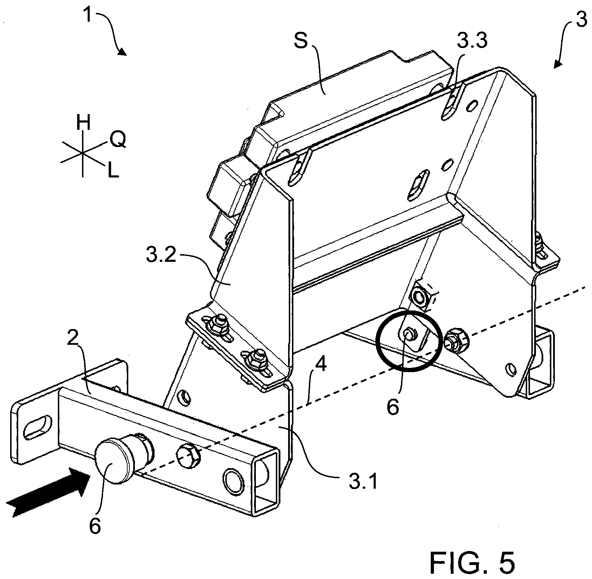

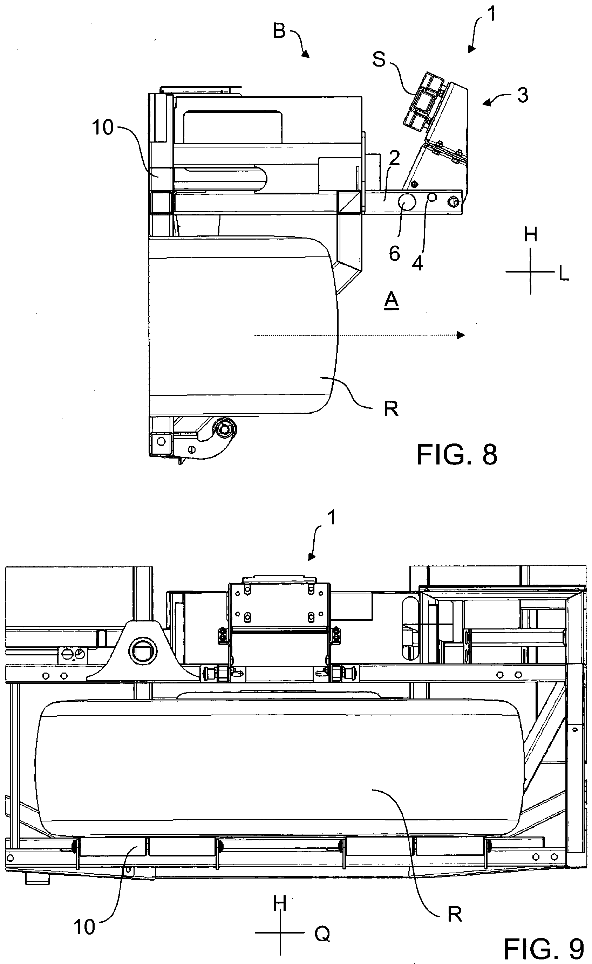

Der Halteabschnitt 3 ist um eine Schwenkachse 4 schwenkbar an dem Tragabschnitt 2 montiert und zwar so, dass er von einem ersten Zustand (vgl. z.B. Figuren 1 und 6) in einen zweiten Zustand (vgl. z.B. die Figuren 5 und 8) gebracht werden kann. Die Haltevorrichtung 1 oder allgemein der Halteabschnitt 3 stellt somit einen klappbaren Sensorhalter dar.

Im ersten Zustand verschließt der Halteabschnitt 3 zumindest teilweise die Ausgangsöffnung A, so dass eine Entnahme des Reserverads R über die Ausgangsöffnung A nicht oder zumindest nicht problemlos möglich ist. Im ersten Zustand befindet sich das Funktionselement S in Betriebsstellung.

Im zweiten Zustand gibt der Halteabschnitt 3 die Ausgangsöffnung A so frei, dass das Reserverad R über die Ausgangsöffnung A entnommen werden kann.

Die Haltevorrichtung 1 umfasst ferner zwei Verbindungselemente 5, die dazu dienen, den Halteabschnitt 3 an dem Tragabschnitt 2 im ersten Zustand zu fixieren. Die Verbindungselemente 5 sind als Schraubverbindungen mit Zentrierbolzen ausgeführt.

Die Haltevorrichtung 1 weist ferner Rast- oder Schnappelemente 6 (nachfolgend Rastelemente genannt) auf, die dazu dienen, den Halteabschnitt 3 an dem Tragabschnitt 2 einerseits im ersten Zustand und andererseits im zweiten Zustand zu fixieren. Die Rastelemente 6 sind jeweils mit einem Vorspannelement (z.B. einer Feder) versehen, das dafür sorgt, dass die Rastelemente 6 selbsttätig und somit automatisch in den Fixierzustand gebracht werden. Die Rastelemente 6 können entgegen der Vorspannwirkung der Vorspannelemente gelöst werden.

Die Schwenkachse 4, die Verbindungselemente 5 und die Rastelemente 6 sind in Längsrichtung L der Haltevorrichtung 1 voneinander beabstandet und zwar so, dass die Schwenkachse 4 zwischen den Verbindungselementen 5 einerseits und den Rastelementen 6 andererseits verläuft.

Der Halteabschnitt 3 ist in drei Teilbereiche unterteilt, nämlich einen ersten oberen Teilbereich 3.1, einen zweiten unteren Teilbereich 3.2 und einen dritten Teilbereich 3.3. Der erste Teilbereich 3.1 ist schwenkbar an den Tragabschnitt 2 montiert. Der zweite Teilbereich 3.2 ist an den ersten Teilbereich 3.1 montiert, während der dritte Teilbereich 3.3 an den zweiten Teilbereich 3.2 montiert ist und das Funktionselement S trägt. Der erste Teilbereich 3.1 und der zweite Teilbereich 3.2 sind über eine Langlochkonstruktion 7.1 miteinander verbunden. Die Langlochkonstruktion 7.1 ermöglicht, dass die Position des zweiten Teilbereichs 3.2 in Längsrichtung L der Haltevorrichtung 1 relativ zum ersten Teilbereich 3.1 einstellbar ist. Der zweite Teilbereich 3.2 und der dritte Teilbereich 3.3 sind über eine Langlochkonstruktion 7.2 miteinander verbunden. Die Langlochkonstruktion 7.2 ermöglicht, dass die Position des dritten Teilbereichs 3.3 in Höhenrichtung H der Haltevorrichtung 1 relativ zu dem zweiten Teilbereich 3.2 einstellbar ist.

Der Tragabschnitt 2 umfasst eine Langlochkonstruktion 7.3 zur Montage an das Kraftfahrzeug. Die Langlochkonstruktion 7.3 ermöglicht, dass die Haltevorrichtung 1 in Querrichtung Q der Haltevorrichtung 1 einstellbar ist.

Die Langlochkonstruktionen 7.1, 7.2 und 7.3 gewährleisten, dass das Funktionselement S in allen drei Raumrichtungen justiert und somit exakt positioniert werden kann.

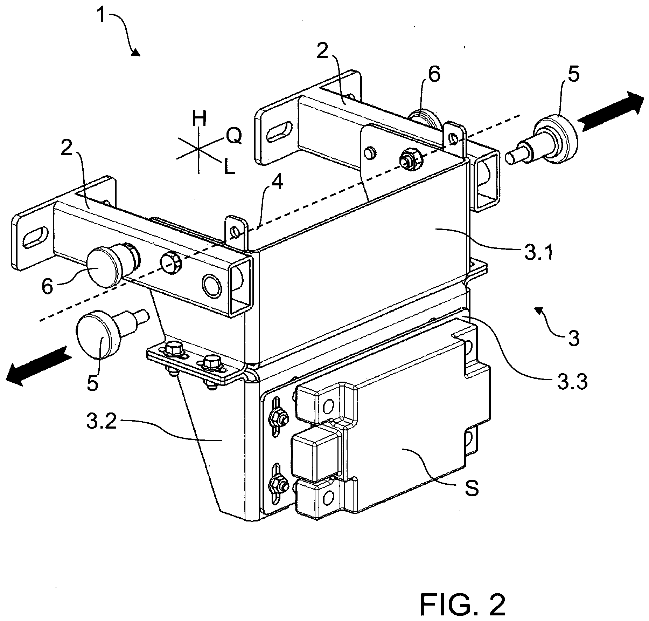

Die Figuren 2 bis 5 verdeutlichen, wie die Haltevorrichtung 1 von dem ersten Zustand, in dem der Halteabschnitt 2 die Ausgangsöffnung A zumindest teilweise verschließt und sich das Funktionselement S in Betriebsstellung befindet, in den zweiten Zustand gebracht werden kann, in dem der Halteabschnitt 3 die Ausgangsöffnung A so freigibt, dass das Reserverad R entnommen werden kann.

Um den Halteabschnitt in den zweiten Zustand zu bringen, werden zunächst gemäß Figur 2 die zwei Verbindungselemente 5 in Querrichtung Q der Haltevorrichtung 1 nach außen gelöst. Der Halteabschnitt 3 bleibt mittels der Rastelemente 6 dennoch im ersten Zustand fixiert. Selbst wenn sich z.B. während der Fahrt des Kraftfahrzeugs die zwei Verbindungselemente 5 unbeabsichtigt lösen sollten, sorgen die Rastelemente 6 dafür, dass das Funktionselement S zumindest im Wesentlichen korrekt positioniert bleibt.

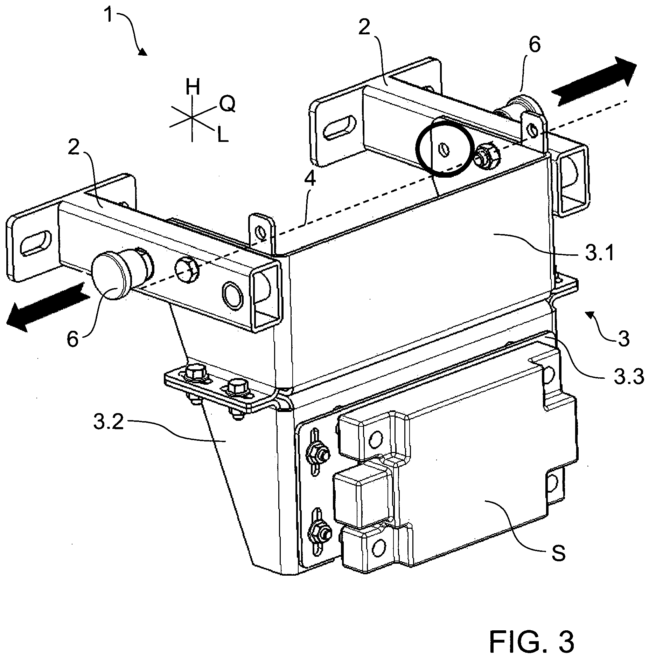

Gemäß Figur 3 werden nun zusätzlich die Rastelemente 6 in Querrichtung Q der Haltevorrichtung 1 nach außen entgegen der Vorspannwirkung der Vorspannelemente gelöst. Nun befindet sich der Halteabschnitt 3 in einem verschwenkbaren Zustand.

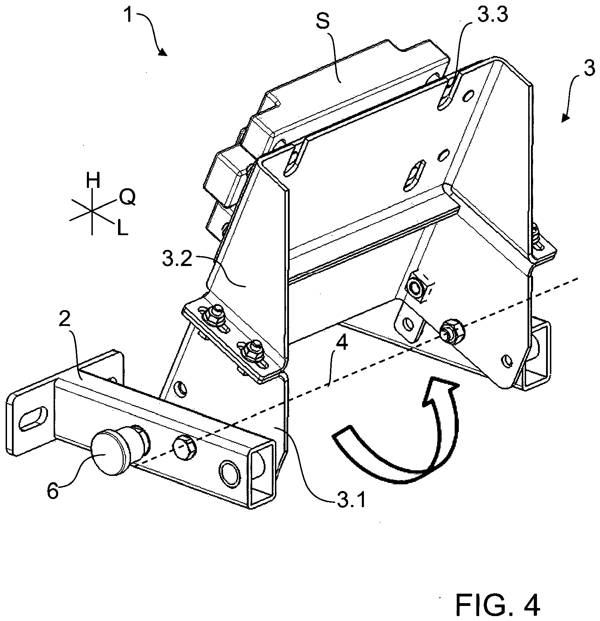

Gemäß Figur 4 kann nun der Halteabschnitt 3 um die Schwenkachse 4 nach oben geschwenkt werden, solange bis die Rastelemente 6 automatisch in den Fixierzustand gelangen.

In Figur 5 befindet sich der Halteabschnitt 3 im hochgeklappten zweiten Zustand. Die Rastelemente 6 dienen dazu, den Halteabschnitt 3 im zweiten Zustand zu fixieren (vgl. durch den Kreis hervorgehobenes Detail in Figur 5).

Figur 6 zeigt eine Seitenansicht eines Kraftfahrzeugbugs B mit montierter Haltevorrichtung 1, während Figur 7 eine dazugehörige Vorderansicht zeigt. Wie schon zuvor erwähnt, umfasst der Kraftfahrzeugbug B die Befestigungseinrichtung 10 für das Reserverad R, das über die Ausgangsöffnung A entnommen werden kann.

Die Figuren 6 und 7 zeigen den Halteabschnitt 3 im ersten Zustand, in dem die Ausgangsöffnung A zumindest teilweise durch den Halteabschnitt 3 verschlossen wird. In dem in den Figuren 6 und 7 gezeigten Zustand kann das Reserverad R nicht oder zumindest nicht problemlos über die Ausgangsöffnung A aus der Befestigungseinrichtung 10 entnommen werden. Figur 7 ist zu entnehmen, dass das Funktionselement S in Querrichtung Q des Kraftfahrzeugs mittig am Kraftfahrzeugbug B positioniert ist.

Figur 8 zeigt eine Seitenansicht des Kraftfahrzeugbugs B mit montierter Haltevorrichtung 1, während Figur 9 eine dazugehörige Vorderansicht zeigt.

Die Figuren 8 und 9 zeigen den Halteabschnitt 3 in hochgeklapptem zweiten Zustand. In dem in den Figuren 8 und 9 gezeigten Zustand kann das Reserverad R über die Ausgangsöffnung A aus der Befestigungseinrichtung 10 zweckmäßig transversal entnommen werden, was durch den Pfeil in Figur 8 schematisch angedeutet ist.

Die Erfindung ist nicht auf die oben beschriebenen bevorzugten Ausführungsformen beschränkt. Vielmehr ist eine Vielzahl von Varianten und Abwandlungen möglich, die ebenfalls von dem Erfindungsgedanken Gebrauch machen und deshalb in den Schutzbereich fallen.

## Patentansprüche

1. Kraftfahrzeug, vorzugsweise Nutzfahrzeug: mit
- einer Befestigungseinrichtung (10) für ein Reserverad (R) des Kraftfahrzeugs, wobei das Reserverad (R) über eine Ausgangsöffnung (A) aus der Befestigungseinrichtung (10) entnehmbar ist, und
- einer am Kraftfahrzeug, vorzugsweise am Kraftfahrzeugbug (B), angeordneten Haltevorrichtung (1) mit:
- einem Tragabschnitt (2), montiert an das Kraftfahrzeug, und
- einem Halteabschnitt (3), an dem ein Funktionselement (S) gehalten wird, wobei der Halteabschnitt (3) um eine Schwenkachse (4) schwenkbar ist, von einem ersten Zustand, in dem er die Ausgangsöffnung (A) zumindest teilweise verschließt, in einen zweiten Zustand, in dem er die Ausgangsöffnung (A) so freigibt, dass das Reserverad (R) entnommen werden kann, und wobei der Halteabschnitt (3) schwenkbar an dem Tragabschnitt (2) montiert ist, **dadurch gekennzeichnet, dass** das Funktionselement (S) eine Sensoreinrichtung ist.

2. Kraftfahrzeug nach Anspruch 1, wobei das Funktionselement (S) in Querrichtung (Q) des Kraftfahrzeugs mittig positioniert ist.

3. Kraftfahrzeug nach einem der vorhergehenden Ansprüche, mit zumindest einem Verbindungselement (5), das dazu dient, den Halteabschnitt (3) an dem Tragabschnitt (2) im ersten Zustand lösbar zu fixieren.

4. Kraftfahrzeug nach Anspruch 3, wobei das Verbindungselement (5) als Schraubverbindung mit Zentrierbolzen ausgeführt ist.

5. Kraftfahrzeug nach einem der vorhergehenden Ansprüche, mit zumindest einem Schnapp- oder Rastelement (6), das dazu dient, den Halteabschnitt (3) an dem Tragabschnitt (2) im ersten Zustand und/oder im zweiten Zustand lösbar zu fixieren.

6. Kraftfahrzeug nach Anspruch 5, wobei das Rast- oder Schnappelement (6) ein Vorspannelement aufweist, mittels dem es automatisch in einen Fixierzustand gebracht wird.

7. Kraftfahrzeug nach einem der vorhergehenden Ansprüche, wobei zumindest zwei der folgenden Teile in Längsrichtung (L) der Haltevorrichtung (1) von einander beabstandet sind:
- die Schwenkachse (4),
- das Verbindungselement (5),
- das Schnapp- oder Rastelement (6).

8. Kraftfahrzeug nach einem der vorhergehenden Ansprüche, wobei die Schwenkachse (4) in Längsrichtung (L) der Haltevorrichtung (1) zwischen dem Verbindungselement (5) und dem Schnapp- oder Rastelement (6) verläuft.

9. Kraftfahrzeug nach einem der vorhergehenden Ansprüche, wobei der Halteabschnitt (3) in verschiedene Teilbereiche (3.1, 3.2) unterteilt ist und einen an dem Tragabschnitt (2) montierten ersten Teilbereich (3.1) und einen zweiten Teilbereich (3.2) aufweist, wobei die Position des zweiten Teilbereichs (3.2) relativ zum ersten Teilbereich (3.1) einstellbar ist, vorzugsweise über eine Langlochkonstruktion (7.1).

10. Kraftfahrzeug nach Anspruch 9, wobei der Halteabschnitt (3) einen dritten Teilbereich (3.3) aufweist, wobei die Position des dritten Teilbereichs (3.3) relativ zum ersten Teilbereich (3.1) und/oder zweiten Teilbereich (3.2) einstellbar ist, vorzugsweise über eine Langlochkonstruktion (7.2).

11. Kraftfahrzeug nach einem der vorhergehenden Ansprüche, wobei der Tragabschnitt (2) mittels einer Langlochkonstruktion (7.3) zur Montage an das Kraftfahrzeug ausgeführt ist.

12. Kraftfahrzeug nach einem der vorhergehenden Ansprüche, wobei die Sensoreinrichtung eine Radarsensoreinrichtung zur Früherkennung eines Hindernisses und/oder für ein Notbrems-Assistenzsystem des Kraftfahrzeugs ist.

## Claims

1. Motor vehicle, preferably utility vehicle: having
- a securing device (10) of a spare wheel (R) of the motor vehicle, wherein the spare wheel (R) is able to be removed from the securing device (10) via an outlet opening (A), and
- a retention device (1) which is arranged on the motor vehicle, preferably on the motor vehicle front end (B), having:
- a carrier portion (2), mounted on the motor vehicle, and
- a retention portion (3) on which a functional element (S) is retained, wherein the retention portion (3) is able to be pivoted about a pivot axis (4) from a first state, in which it at least partially closes the outlet opening (A), into a second state, in which it opens the outlet opening (A) in such a manner that the spare wheel (R) can be removed, and wherein the retention portion (3) is pivotably mounted on the carrier portion (2), **characterized in that** the functional element (S) is a sensor device.

2. Motor vehicle according to Claim 1, wherein the functional element (S) is positioned centrally in the transverse direction (Q) of the motor vehicle.

3. Motor vehicle according to any one of the preceding claims, having at least one connection element (5), which serves to releasably fix the retention portion (3) to the carrier portion (2) in the first state.

4. Motor vehicle according to Claim 3, wherein the connection element (5) is constructed as a screw connection with centering pins.

5. Motor vehicle according to any one of the preceding claims, having at least one snap-fitting or catch element (6), which serves to releasably fix the retention portion (3) to the carrier portion (2) in the first state and/or in the second state.

6. Motor vehicle according to Claim 5, wherein the snap-fitting or catch element (6) has a pretensioning element, by means of which it is automatically moved into a fixing state.

7. Motor vehicle according to any one of the preceding claims, wherein at least two of the following components are spaced apart from each other in the longitudinal direction (L) of the retention device (1):
- the pivot axis (4),
- the connection element (5),
- the snap-fitting or catch element (6).

8. Motor vehicle according to any one of the preceding claims, wherein the pivot axis (4) extends in the longitudinal direction (L) of the retention device (1) between the connection element (5) and the snap-fitting or catch element (6).

9. Motor vehicle according to any one of the preceding claims, wherein the retention portion (3) is sub-divided into different part-regions (3.1, 3.2) and has a first part-region (3.1) which is mounted on the carrier portion (2) and a second part-region (3.2), wherein the position of the second part-region (3.2) is able to be adjusted relative to the first part-region (3.1), preferably by means of an elongate hole construction (7.1).

10. Motor vehicle according to Claim 9, wherein the retention portion (3) has a third part-region (3.3), wherein the position of the third part-region (3.3) is able to be adjusted relative to the first part-region (3.1) and/or second part-region (3.2), preferably by means of an elongate hole construction (7.2).

11. Motor vehicle according to any one of the preceding claims, wherein the carrier portion (2) is constructed for assembly on the motor vehicle by means of an elongate hole construction (7.3).

12. Motor vehicle according to any one of the preceding claims, wherein the sensor device is a radar sensor device for early recognition of an obstacle and/or for an emergency brake assistance system of the motor vehicle.

## Revendications

1. Véhicule automobile, de préférence véhicule utilitaire : avec
- un dispositif de fixation (10) pour une roue de secours (R) du véhicule automobile, la roue de secours (R) pouvant être retirée du dispositif de fixation (10) via une ouverture de sortie (A) ; et
- un dispositif de retenue (1) disposé au niveau du véhicule automobile, de préférence au niveau de l'avant de véhicule automobile (B), avec :
- une section portante (2), montée au véhicule automobile ; et
- une section de retenue (3) au niveau de laquelle un élément fonctionnel (S) est maintenu ;
la section de retenue (3) pouvant pivoter autour d'un axe de pivotement (4), d'un premier état dans lequel elle ferme au moins en partie l'ouverture de sortie (A), jusque dans un deuxième état dans laquelle elle libère de telle sorte l'ouverture de sortie (A) que la roue de secours (R) peut être retirée et la section de retenue (3) étant montée de façon à pouvoir pivoter au niveau de la section portante (2), **caractérisé en ce que** l'élément fonctionnel (S) est un dispositif de détection.

2. Véhicule automobile selon la revendication 1, l'élément fonctionnel (S) étant positionné de façon centrale dans la direction transversale (Q) du véhicule automobile.

3. Véhicule automobile selon l'une quelconque des revendications précédentes, avec au moins un élément de liaison (5) servant à fixer de façon amovible la section de retenue (3) à la section portante (2) dans le premier état.

4. Véhicule automobile selon la revendication 3, l'élément de liaison (5) étant réalisé sous la forme d'une liaison vissée avec boulon de centrage.

5. Véhicule automobile selon l'une quelconque des revendications précédentes, avec au moins un élément d'encliquetage ou d'arrêt (6) servant à fixer de façon amovible la section de retenue (3) à la section portante (2) dans le premier état et/ou dans le deuxième état.

6. Véhicule automobile selon la revendication 5, l'élément d'arrêt ou d'encliquetage (6) comportant un élément de précontrainte à l'aide duquel il est amené automatiquement dans un état de fixation.

7. Véhicule automobile selon l'une quelconque des revendications précédentes, au moins deux des parties suivantes étant placées à une certaine distance l'une de l'autre dans la direction longitudinale (L) du dispositif de retenue (1) :
- l'axe de pivotement (4) ;
- l'élément de liaison (5) ;
- l'élément d'encliquetage ou d'arrêt (6).

8. Véhicule automobile selon l'une quelconque des revendications précédentes, l'axe de pivotement (4) s'étendant dans la direction longitudinale (L) du dispositif de retenue (1) entre l'élément de liaison (5) et l'élément d'encliquetage ou d'arrêt (6).

9. Véhicule automobile selon l'une quelconque des revendications précédentes, la section de retenue (3) étant subdivisée en différentes régions partielles (3.1, 3.2) et comportant une première région partielle (3.1) montée à la section portante (2) et une deuxième région partielle (3.2), la position de la deuxième région partielle (3.2) étant réglable par rapport à la première région partielle (3.1), de préférence via une construction en trou oblong (7.1).

10. Véhicule automobile selon la revendication 9, la section de retenue (3) comportant une troisième région partielle (3.3), la position de la troisième région partielle (3.3) étant réglable par rapport à la première région partielle (3.1) et/ou à la deuxième région partielle (3.2), de préférence via une construction en trou oblong (7.2).

11. Véhicule automobile selon l'une quelconque des revendications précédentes, la section portante (2) étant réalisée au moyen d'une construction en trou oblong (7.3) pouvant être montée au véhicule automobile.

12. Véhicule automobile selon l'une quelconque des revendications précédentes, le dispositif de détection étant un dispositif de détection radar permettant d'identifier précocement un obstacle et/ou pour un système d'aide au freinage d'urgence du véhicule automobile.
